# EUROPEAN PATENT APPLICATION

(11) **EP 4 573 988 A1**
(43) Date of publication of application: **25.06.2025**
(21) Application number: 24220554.0
(22) Date of filing: 17.12.2024
(51) Int. Cl.: A47J 31/44

(54) **BREW BASKET FOR AN AIRCRAFT GALLEY COFFEE MAKER**

(30) Priority: 20.12.2023 US 202363612415 P; 11.12.2024 US 202418976480
(71) Applicant: Aereos Interior Solutions, LLC, Euless TX 76040 (US)
(72) Inventor: BISKAY, Walter Hoover III, Garland, TX 75044 (US)
(74) Representative: Buzzi, Notaro & Antonielli d'Oulx S.p.A.

(57) **Abstract**

A brew basket (108; 208) for a brewing apparatus (100) includes a bottom wall (132; 232) including a dispensing opening (138; 238) and a peripheral wall (130; 230) extending from the bottom wall (132; 232) to define a basket opening (150; 250) configured to receive a coffee filter (pillow) pack. A structure (264; 400) is installed within the basket opening (150; 250) for providing liquid channels (274; 410) between a back side of the structure (264; 400) and an interior surface of the peripheral wall (130; 230). The structure (264; 400) may include a number of perforated sidewall spacers (264) mounted to the interior surface of the peripheral wall (130). The structure may include an insert spacing ring (400) insertion into the basket opening (250), wherein the insert spacing ring (400) includes a sidewall (402) with perforated sidewall protrusions (406).

## Description

### CROSS REFERENCE TO RELATED APPLICATIONS

This application claims priority to United States Provisional Application for Patent No. 63/612,415, filed December 20, 2023, and to United States Application for Patent No. 18/976,480 filed December 11, 2024.

### TECHNICAL FIELD

The present invention generally relates to a brewing machine (for coffee, for example) used in an aircraft galley and, in particular, to an improved brew basket for use in such a brewing machine.

### BACKGROUND

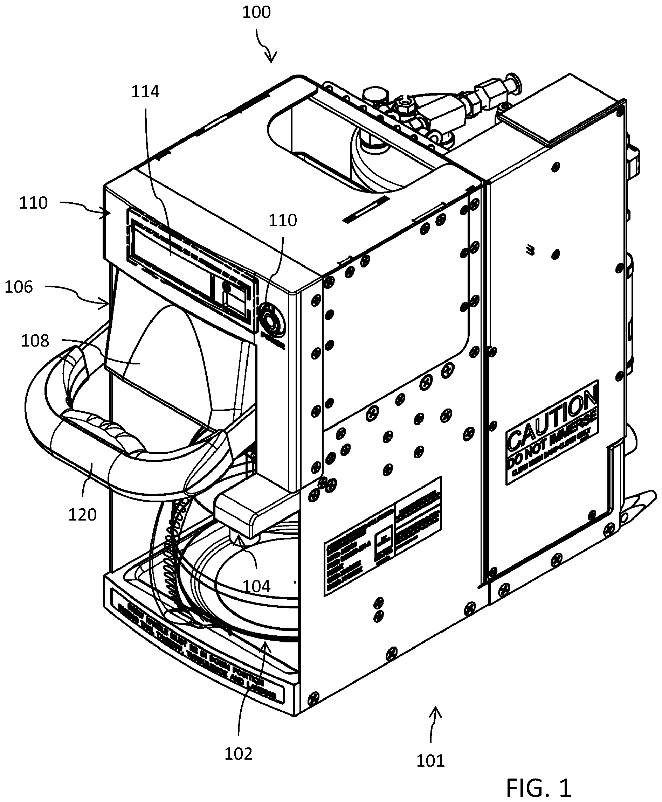

Reference is made to Figure 1 which shows an isometric view of a brewing apparatus 100. The brewing apparatus 100 may be installed within the galley of any type of vehicle. In particular, the brewing apparatus 100 is configured for installation in an aircraft galley. In this context, the brewing apparatus 100 is configured in accordance with guidelines and/or standards put forth by, but not limited to, for example, the Federal Aviation Administration (FAA).

The brewing apparatus 100 includes a chassis 101 configured to house components of a brewing system. This brewing system may include, for example, a heating subsystem formed for example to include a heating element for heating a liquid such as water, a plumbing subsystem formed for example to include plumbing components such as tanks, pipes, couplers, tubes, etc., for holding and transporting a liquid such as water, and an electronic and control subsystem formed for example to include electrical components such as user displays, power supplies, microcontrollers, etc., for controlling brewing operations. Brewing systems of the type shown in Figure 1 are known in the art and available from a number of different suppliers.

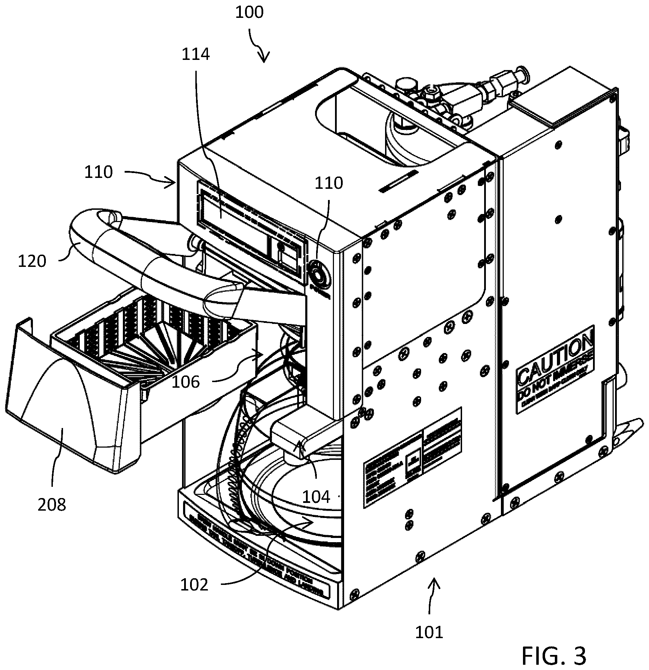

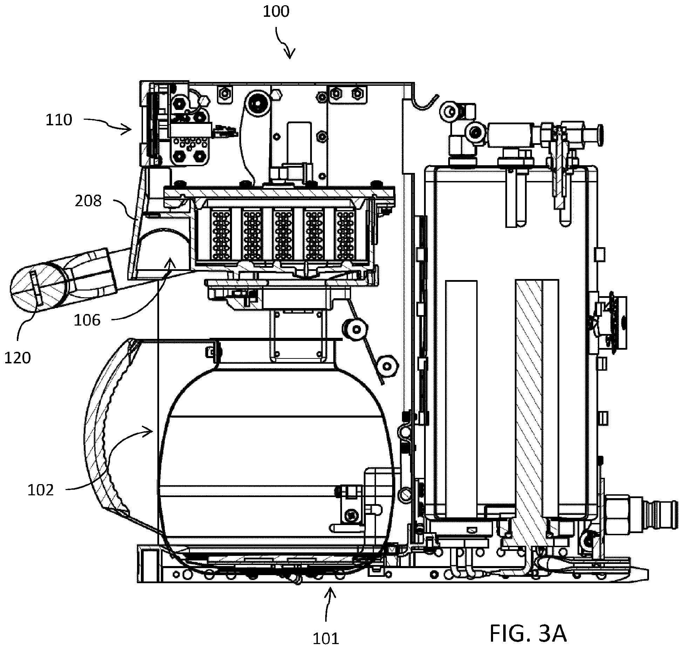

At the front of the brewing apparatus 100, the chassis 101 provides a carafe cavity 102 configured to receive a liquid serving carafe, a liquid dispenser 104 configured to dispense heated water, a brew cavity 106 configured to receive a brew basket 108 in a position over the liquid serving carafe, and a control panel 110 including one or more actuation buttons 112 and a user information display screen 114. A coffee maker handle 120 is provided to control securing the brew basket 108 within the brew cavity 106 during a brewing operation. With the coffee maker handle 120 in the "down" position, as shown in Figure 1, the brew basket 108 is locked within the brew cavity 106 and the brewing system is enabled for performing the brewing operation in which heated water is dispensed into the brew basket 108 containing a coffee filter (pillow) pack (the configuration and implementation of which is well known to those skilled in the art). Brewed coffee is dispensed from the bottom of the brew basket 108 into the carafe held within the carafe cavity 102. Conversely, when the coffee maker handle 120 in moved to the "up" position, as shown in Figure 3, the brewing system is disabled and the brew basket 108 can be removed from the brew cavity 106 to dispose of the used coffee filter (pillow) pack.

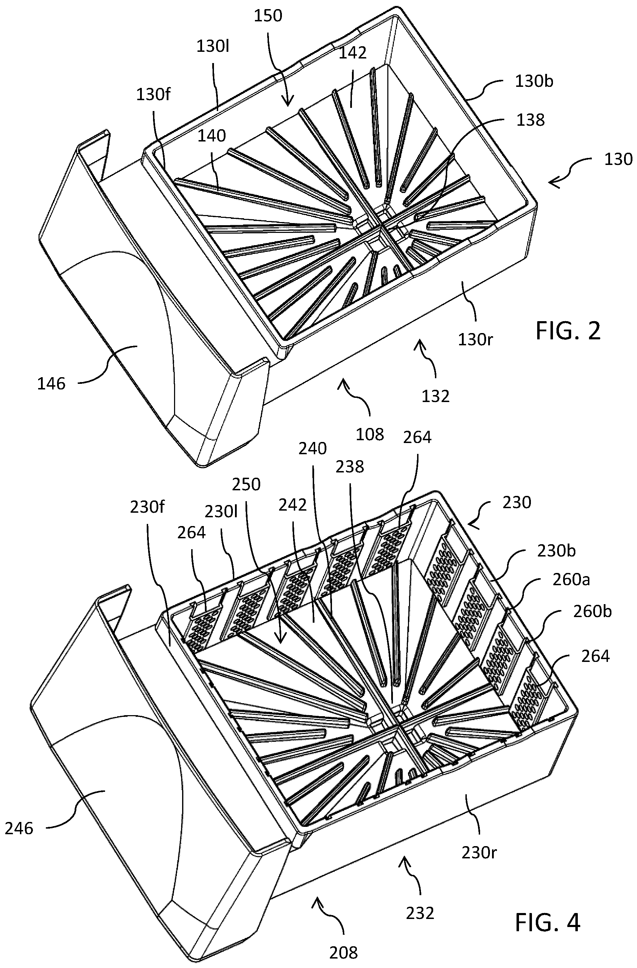

Reference is now made to Figure 2 which shows an isometric view of the brew basket 108. The brew basket 108 includes a peripheral wall 130 and a bottom wall 132. As illustrated, the peripheral wall 130 comprises four wall segments 130f (front wall segment), 130b (back wall segment), 130l (left wall segment) and 130r (right wall segment). The wall segments are flat rectangular members arranged in opposed pairs (left-right, front-back). The bottom wall 132 has a rectangular shape in plan view and the wall segments 130f, 130b, 130l and 130r extend upwardly from the side edges of the bottom wall 132. The peripheral wall 130 and bottom wall 132 may be fabricated, for example through an injection molding process, as a single component. Alternatively, the peripheral wall 130 and bottom wall 132 may be separately fabricated and mounted to each other using, for example, an adhesive glue or bonding agent or other mechanical attachment means. A basket handle 146 is provided at (for example, extending forwardly from) the front wall segment 130f of the brew basket 108. An underside of the basket handle 146 provides a finger grip region allowing a user to pull/push the brew basket 108 from/into the brew cavity 106 of the brewing apparatus 100.

The interior surface of the peripheral wall 130 is smooth. The bottom wall 132 includes a dispensing opening 138. The interior surface of the bottom wall 132 is sloped from each of the four side edges towards the dispensing opening 138. The interior surface of the bottom wall 132 further includes a plurality of fins 140 extending longitudinally in a radial direction away from the dispensing opening 138 with outward ends terminating at a connection with the peripheral wall 130, and having a height that extends upwardly from the interior surface of the bottom wall 132. The radially extending fins 140 define fluid channels 142 which serve to direct liquid within the brew basket 108 towards the dispensing opening 138. The height of the fins 140 further serve to lift (or support) a coffee filter (pillow) pack (not shown) containing, for example, ground coffee, above the interior surface of the bottom wall 132. Two or more of the fins 140 may intersect at, and extend over, the dispensing opening 138 and provide support against the filter sagging into the dispensing opening 138. The inward ends of the remaining fins 140 may terminate at various locations prior to reaching the dispensing opening 138.

The coffee filter (pillow) pack retains the ground coffee and has a rectangular size and shape (i.e., a pillow shape) generally conforming to the rectangular size and shape of the basket opening 150 defined by the wall segments 130f, 130b, 130l and 130r of the peripheral wall 130. It has been noted that when the coffee filter (pillow) pack utilizes very finely ground coffee, there is a risk during the brewing operation of liquid overflow. The source of this overflow problem has been traced to the dispensed water causing a volume expansion of the ground coffee in the coffee filter (pillow) pack during the brewing operation resulting is a less permeable mass and a sealing of the sides of the coffee filter (pillow) pack against the interior surfaces of the wall segments 130f, 130b, 130l and 130r and inhibiting liquid flow. The brew basket 108 overflows due to the flow rate of the water introduced into the brew basket 108 exceeding the flow rate of brewed coffee passing out through the dispensing opening 138.

One solution to this problem is to reduce the flow rate for water entry into the brew basket 108 in order to permit percolation to occur through the coffee filter (pillow) pack without liquid overflow. However, this results in an increase in the total brewing time which was found to be unsatisfactory to the customer.

There is accordingly a need in the art address the foregoing liquid overflow problem with a solution that does not adversely affect the brewing operation in terms of brew result or brew time. In particular, a need exits for an improved brew basket for use in a brewing apparatus that supports timely brewing with a finely ground coffee filter (pillow) pack with a minimized, or eliminated, risk over liquid overflow.

### SUMMARY

In an embodiment, a brew basket for a brewing apparatus comprises: a bottom wall including a dispensing opening; a peripheral wall extending from the bottom wall to define a basket opening configured to receive a coffee filter (pillow) pack; and means installed within the basket opening for providing a plurality of liquid channels between a back side of said means and an interior surface of the peripheral wall.

In an implementation, said means comprises a plurality of perforated sidewall spacers that are mounted at the interior surface of the peripheral wall, each perforated sidewall spacer including a face plate with an array of perforation through openings, wherein said liquid channel is provided between a back side of the face plate and the interior surface of the peripheral wall, each perforated sidewall spacer further including tabs at side edges of the face plate, wherein said tabs engage with slots provided in the interior surface of the peripheral wall. In such implementation said slots may have an L-shaped cross-section and said tabs may have an L-shaped cross-section configured to engage within the L-shaped cross-section of the slots. Said bottom wall may be sloped from the peripheral wall towards the dispensing opening, and the brew basket may further include a plurality of ribs at the bottom wall which radially extend away from the dispensing opening. The ribs define fluid channels configured to direct liquid within the brew basket towards the dispensing opening.

In another implementation, said means comprises an insert spacing ring configured for insertion into the basket opening, said insert spacing ring including a sidewall with a plurality of perforated sidewall protrusions, each perforated sidewall protrusion including an array of perforation through openings, wherein said liquid channel is provided between a back side of the perforated sidewall protrusion and the interior surface of the peripheral wall. In such implementation, said bottom wall my be sloped from the peripheral wall towards the dispensing opening and the brew basket may include a plurality of ribs at the bottom wall which radially extend away from the dispensing opening. The ribs define fluid channels configured to direct liquid within the brew basket towards the dispensing opening. The insert spacing ring may further include a plurality of tabs along a bottom edge of the sidewall, wherein each tab includes a slot configured to engage with a corresponding one of ribs. The sidewall of the insert spacing ring may include said perforated sidewall protrusions interleaved with non-perforated regions of the sidewall. Each perforated sidewall protrusion may have an inwardly spaced offset relative to adjacent non-perforated regions of the sidewall. In both the above implementations, the filter comprises a coffee pillow filter pack.

In an embodiment, a brew basket for a brewing apparatus comprises: a bottom wall including a dispensing opening; a peripheral wall extending from the bottom wall to define a basket opening configured to receive a coffee filter (pillow) pack; and a plurality of perforated sidewall spacers, wherein each perforated sidewall spacer comprises a face plate with an array of perforation through openings and a mounting tab configured to mount within a corresponding mounting slot at the interior surface of the peripheral wall; each perforated sidewall spacer defining a liquid channel between a back side of the face plate and the interior surface of the peripheral wall. The mounting slot may have an L-shaped cross-section and the mounting tab may have an L-shaped cross-section configured to engage within the L-shaped cross-section of the mounting slot. The filter comprises a coffee pillow filter pack.

In an embodiment, an insert spacing ring is configured for insertion into a brew basket of a brewing apparatus, wherein said brew basket includes a bottom wall including a dispensing opening and a peripheral wall extending from the bottom wall to define a basket opening. The insert spacing ring comprises: a sidewall with a shape conforming for insertion into the basket opening and configured to receive a coffee filter (pillow) pack, the sidewall including a plurality of perforated sidewall protrusions, each perforated sidewall protrusion including an array of perforation through openings; each perforated sidewall protrusion defining a liquid channel between a back side of the insert spacing ring and the interior surface of the peripheral wall. The sidewall of the insert spacing ring may include said perforated sidewall protrusions interleaved with non-perforated regions of the sidewall. Each perforated sidewall protrusion may have an inwardly spaced offset relative to adjacent non-perforated regions of the sidewall. The insert spacing ring may further include a plurality of tabs along a bottom edge of the sidewall, wherein each tab includes a slot configured to engage with a corresponding rib at the bottom wall of the brew basket. The filter comprises a coffee pillow filter pack.

### BRIEF DESCRIPTION OF THE DRAWINGS

For a better understanding of the embodiments, reference will now be made by way of example only to the accompanying figures in which:
Figure 1 shows an isometric view of a brewing apparatus;
Figure 2 shows an isometric view of a brew basket for use with the brewing apparatus of Figure 1;
Figure 3 illustrates an improved brew basket and brewing apparatus;
Figure 3A shows a cross-section of the brewing apparatus with the brew basket installed;
Figure 4 shows an isometric view of a brew basket for use with the brewing apparatus of Figure 3;
Figure 5 is a top view of the brew basket with a detail illustration taken at the peripheral wall;
Figure 5A is a cross-sectional view of the brew basket of Figure 5;
Figure 6 is an exploded perspective view of the brew basket of Figures 4 and 5;
Figure 7A is a perspective view of a perforated sidewall channel used in the Figures 4 and 5;
Figure 7B is a front view of the perforated sidewall channel;
Figure 7C is an end view of the perforated sidewall channel;
Figure 8 shows an isometric view of a brew basket for use with the brewing apparatus of Figure 3;
Figure 9 is an exploded perspective view of the brew basket of Figure 8;
Figure 9A shows a perspective view of an insert spacing ring for installation within the brew basket for the embodiment of Figures 8 and 9; and
Figure 10 is a cross-sectional view showing the insert spacing ring installed within the brew basket for the embodiment of Figures 8 and 9.

### DETAILED DESCRIPTION

Reference is made to Figure 3 which shows an improved brew basket 208 for use with the brewing apparatus 100. A cross-sectional view of the brewing apparatus 100 with the brew basket 208 installed is shown in Figure 3A. Like references in Figures 1, 3 and 3A refer to same or similar components as previously described. The brew basket 208 is received in the brew cavity 106 in a position over the liquid serving carafe. Insertion of the brew basket 208 into the brew cavity 106 and removal of the brew basket 208 from the brew cavity 106 can occur when coffee maker handle 120 is in the "up" position as shown. Movement of the coffee maker handle 120 to the "down" position (as shown in Figure 3A) securely retains the inserted brew basket 208 within the brew cavity 106.

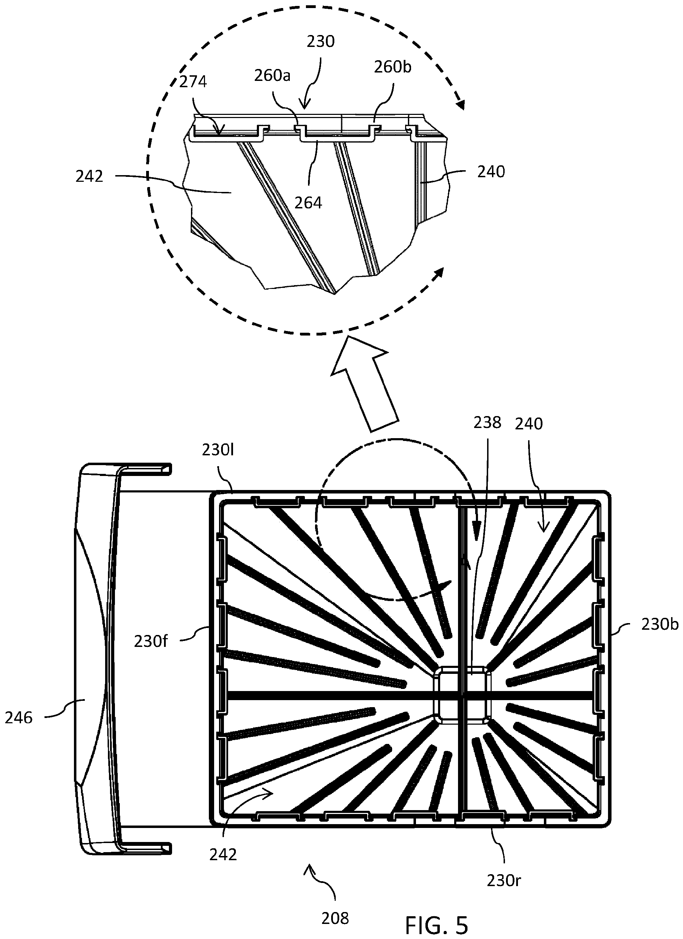

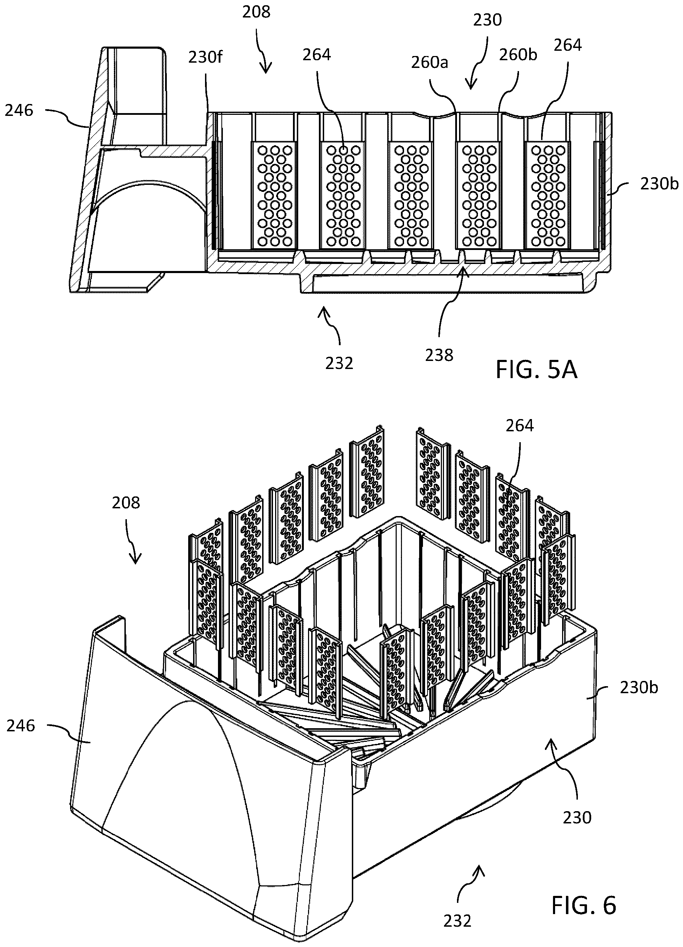

Figure 4 shows an isometric view of the brew basket 208. Figures 5 and 5A show a top view and cross-sectional view, respectively, of the brew basket 208 with detail at the side peripheral wall also shown in Figure 5. Figure 6 shows an exploded perspective view of the brew basket 208. The brew basket 208 includes a peripheral wall 230 and a bottom wall 232. As illustrated, the peripheral wall 230 comprises four wall segments 230f (front wall segment), 230b (back wall segment), 230l (left wall segment) and 230r (right wall segment). The wall segments are flat rectangular members arranged in opposed pairs (left-right, front-back). The bottom wall 232 has a rectangular shape in plan view and the wall segments 230f, 230b, 230l and 230r extend upwardly from the side edges of the bottom wall 232. The peripheral wall 230 and bottom wall 232 may be fabricated, for example through an injection molding process, as a single component and define a basket opening 250 sized and shaped, and thus configured, to receive a coffee filter (pillow) pack (not shown). Alternatively, the peripheral wall 230 and bottom wall 232 may be separately fabricated and mounted to each other using, for example, an adhesive glue or a bonding agent or other mechanical attachment means. A basket handle 246 is provided at (extending forwardly from) the front wall segment 230f of the brew basket 208. An underside of the basket handle 246 provides a finger grip region allowing a user to pull/push the brew basket 208 from/into the brew cavity 106 of the brewing apparatus 100.

The bottom wall 232 includes a dispensing opening 238. The interior surface of the bottom wall 232 is sloped from each of the four side edges towards the dispensing opening 238. The interior surface of the bottom wall 232 further includes a plurality of fins 240 extending longitudinally in a radial direction away from the dispensing opening 238 with outward ends terminating at a connection with the peripheral wall 230. The radially extending fins 240 define fluid channels 242 which serve to direct liquid within the brew basket 208 towards the dispensing opening 238. The height of the fins 240 further serve to lift or support a coffee filter (pillow) pack (not shown) containing, for example, ground coffee, above the interior surface of the bottom wall 232. Two or more of the fins 240 may intersect at, and extend over, the dispensing opening 238 and provide support against the filter sagging into the dispensing opening 238. The inward ends of the remaining fins 240 may terminate at various locations prior to reaching the dispensing opening 238.

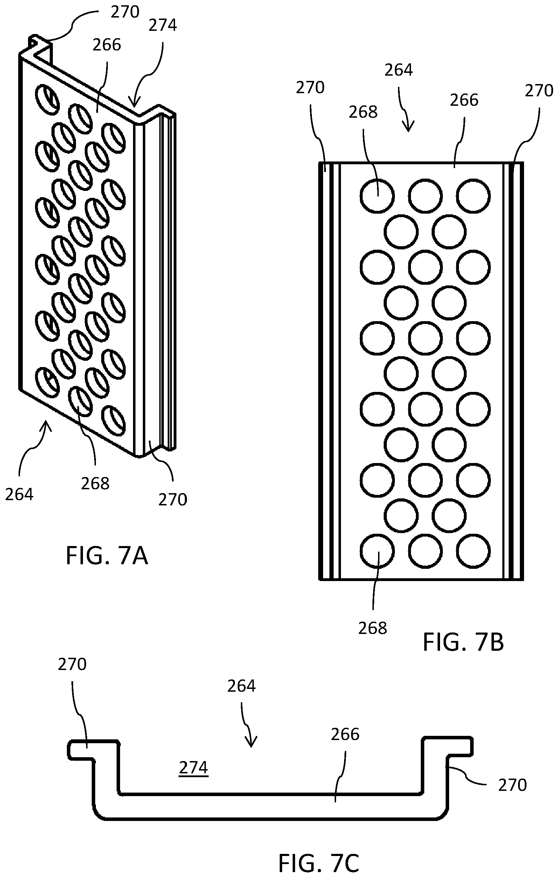

The interior surface of the peripheral wall 230 includes a plurality of pairs of spaced apart mounting channels 260a, 260b. The cross-section of each mounting channel 260a, 260b has an L-shape. The L-shaped cross-sections for the spaced apart mounting channels 260a, 260b in each pair mirror each other. The mounting channels 260a, 260b extend from the top edge of each wall segments 230f, 230b, 230l and 230r towards the bottom wall 232. A perforated sidewall spacer 264 is installed in, and is retained by, each pair of spaced apart mounting channels 260a, 260b. Details of the perforated sidewall spacer 264 are shown in Figures 7A, 7B and 7C. The perforated sidewall spacer 264 has a face plate 266 including an array of perforation through openings 268. The openings 268 are illustrated, by example only, as being round openings. It will be understood, however, that the openings 268 may have any desired shape including, without limitation, square or rectangular. The length of the perforated sidewall spacer 264 from a top edge to a bottom edge is less than or equal to a depth of the wall segments 230f, 230b, 230l and 230r from the top edge brew basket 208 to the bottom wall 232. The width of the perforated sidewall spacer 264 from a left edge to a right edge generally corresponds to the distance between the spaced apart mounting channels 260a, 260b of each pair. A tab 270 extends rearwardly from each of the left and right edges of the perforated sidewall spacer 264. The tabs 270 have an L-shaped cross-section, mirroring each other, that conforms in size and shape to the L-shaped cross-sections for the spaced apart mounting channels 260a, 260b. In an embodiment, that the L-shaped tabs 270 can freely slide into and out of the spaced apart mounting channels 260a, 260b and retain the perforated sidewall spacer 264 within the opening 250. This permits the perforated sidewall spacers 264 to be removed from the brew basket for cleaning and/or maintenance and/or replacement. In another embodiment, the L-shaped tabs 270 may instead have a friction fit, press fit, or snap fit relationship with the spaced apart mounting channels 260a, 260b. This permits a more permanent installation of the perforated sidewall spacers 264 within the basket 230. When installed in a corresponding pair of spaced apart mounting channels 260a, 260b at the peripheral wall 230 of the brew basket 208, a liquid channel 274 is provided between the back side of the perforated sidewall spacer 264 (in particular, the back side of the face plate 266) and the interior surface of the peripheral wall 230. The perforation through openings 268 in the face plate 266 permit liquid to flow from the interior of the brew basket 208 through the liquid channel 274 to reach and further flow through the fluid channels 242 defined by the radially extending fins 240 to the dispensing opening 238.

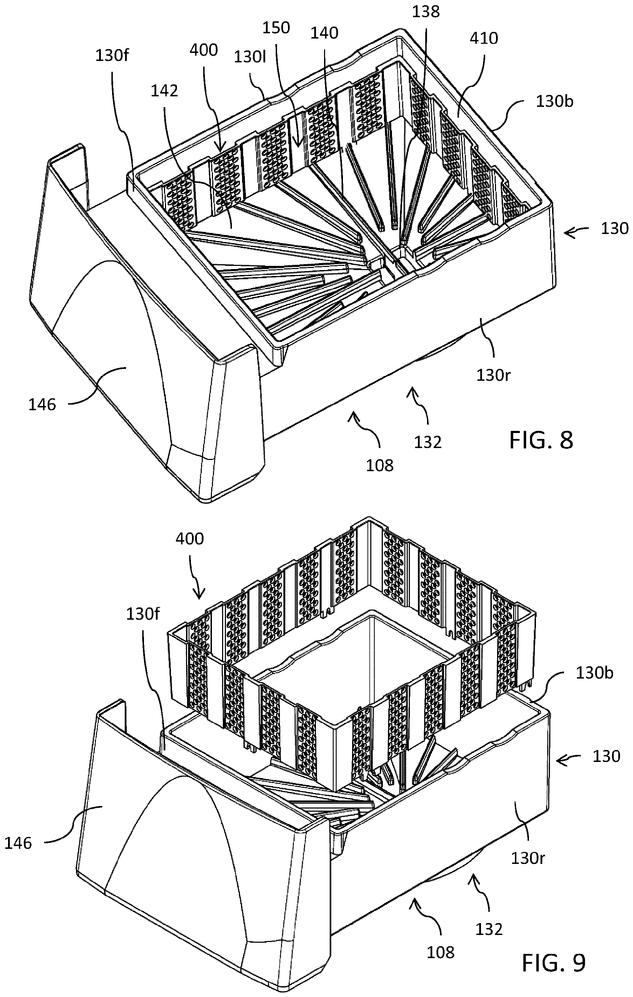

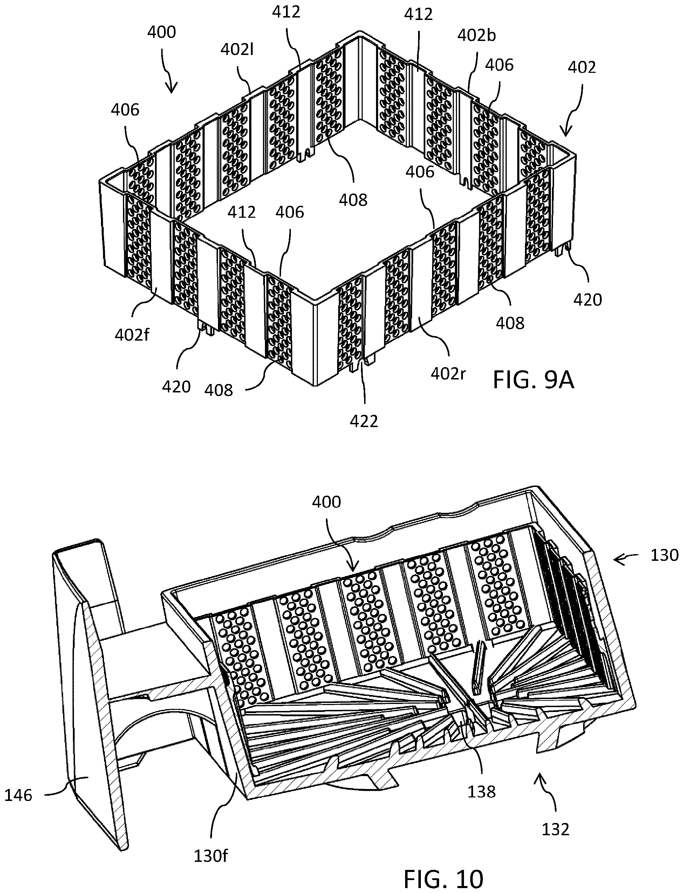

Figure 8 shows an isometric view of the brew basket 108 (see, also, Figure 2) with an included insert spacing ring 400. Figure 9 shows an exploded perspective view of the insert spacing ring 400 with the brew basket 108 and Figure 9A shows just the insert spacing ring 40 in perspective view. The advantage of using the insert spacing ring 400 is that it permits retrofitting the brew basket 108 to provide for improved brewing performance. The insert spacing ring 400 includes a sidewall 402 comprising four wall segments 402f (front wall segment), 402b (back wall segment), 402l (left wall segment) and 402r (right wall segment) which parallel the wall segments 130f, 130b, 130l and 130r, respectively, of the brew basket 108. The sidewall 402 has a shape (for example, rectangular) conforming for insertion into the basket opening 150 (also rectangular) and which is configured to receive a coffee filter (pillow) pack. The wall segments are rectangular members arranged in opposed pairs (left-right, front-back). Each wall segment 402 includes at least one, and preferably a plurality of, perforated sidewall protrusions 406. Each perforated sidewall protrusion 406 includes an array of perforation through openings 408. The perforated sidewall protrusion 406 are interleaved with non-perforated regions 412 of the wall segment 402, where there is an inward spacing offset of the perforated sidewall protrusion 406 relative to the adjacent non-perforated regions 412 of the wall segment 402. When the insert spacing ring 400 is installed in the brew basket 108, the non-perforated regions 412 of the wall segment 402 are positioned adjacent to the peripheral wall 130, and a liquid channel 410 is provided between the back side of each perforated sidewall protrusion 406 and the interior surface of the peripheral wall 130. The perforation through openings 408 permit liquid to flow from the interior of the brew basket 108 through the liquid channel 410 to reach and further flow through the fluid channels 142 defined by the radially extending fins 140 to the dispensing opening 138. A plurality of standoffs 420 are provided at the bottom edge of the insert spacing ring 400. Each standoff 420 includes a slot 422 configured to permit the standoff to straddle over a corresponding radially extending fin 140 as shown in Figure 10. In an embodiment, each standoff 420 is mounted and attached to its corresponding fin 140 of the basket 130 in order to permanently install the insert spacing ring 400. Alternatively, the slot 422 may be sized such that there is a friction fit or loose fit between the standoff 420 and fin 140 to assist in securing the insert spacing ring 400 within the brew basket 108, while also permitting the insert spacing ring 400 to be removed from the basket 108 when necessary, such as for cleaning and/or maintenance and/or replacement.

While the invention has been illustrated and described in detail in the drawings and foregoing description, such illustration and description are considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

## Claims

1. A brew basket (108; 208) for a brewing apparatus (100), comprising:
a bottom wall (132; 232) including a dispensing opening (138; 238);
a peripheral wall (130; 230) extending from the bottom wall (132; 232) to define a basket opening (150; 250) configured to receive a filter; and
means (264; 400) installed within the basket opening (150; 250) for providing a plurality of liquid channels (274; 410) between a back side of said means (264; 400) and an interior surface of the peripheral wall (130; 230).

2. The brew basket (208) of claim 1, wherein said means (264) comprises a plurality of perforated sidewall spacers (264) that are mounted at the interior surface of the peripheral wall (230), each perforated sidewall spacer (264) including a face plate (266) with an array of perforation through openings (268), wherein said liquid channel is provided between a back side of the face plate (266) and the interior surface of the peripheral wall (230), each perforated sidewall spacer (264) further including tabs (270) at side edges of the face plate (266), wherein said tabs (270) engage with slots (260a, 260b) provided in the interior surface of the peripheral wall (230),

3. The brew basket (208) of claim 2, wherein said slots (260a, 260b) have an L-shaped cross-section and wherein said tabs (270) have an L-shaped cross-section configured to engage within the L-shaped cross-section of the slots (260a, 260b).

4. The brew basket (208) of claim 1, wherein said bottom wall (232) is sloped from the peripheral wall (230) towards the dispensing opening (238), and further including a plurality of ribs (240) at the bottom wall (232) which radially extend away from the dispensing opening (238), wherein said ribs (240) define fluid channels configured to direct liquid within the brew basket (208) towards the dispensing opening (238).

5. The brew basket (108) of claim 1, wherein said means comprises an insert spacing ring (400) configured for insertion into the basket opening (150), said insert spacing ring (400) including a sidewall (402) with a plurality of perforated sidewall protrusions (406), each perforated sidewall protrusion (406) including an array of perforation through openings (408), wherein said liquid channel (410) is provided between a back side of the perforated sidewall protrusion (406) and the interior surface of the peripheral wall (130).

6. The brew basket (108) of claim 5, wherein said bottom wall (132) is sloped from the peripheral wall (130) towards the dispensing opening (138) and further including a plurality of ribs (140) at the bottom wall (132) which radially extend away from the dispensing opening (138) wherein said ribs (140) define fluid channels configured to direct liquid within the brew basket (108) towards the dispensing opening (138).

7. The brew basket (108) of claim 6, wherein the insert spacing ring (400) further includes a plurality of tabs (420) along a bottom edge of the sidewall (402), wherein each tab (420) includes a slot (422) configured to engage with a corresponding one of ribs (140).

8. The brew basket of claim 5, wherein said sidewall (402) of the insert spacing ring (400) includes said perforated sidewall protrusions (406) interleaved with non-perforated regions (412) of the sidewall, and wherein each perforated sidewall protrusion (406) has an inwardly spaced offset relative to adjacent non-perforated regions (412) of the sidewall.

9. The brew basket (108; 208) of claim 1, wherein the filter comprises a coffee pillow filter pack.

10. A brew basket (208) for a brewing apparatus, comprising:
a bottom wall (232) including a dispensing opening (238);
a peripheral wall (230) extending from the bottom wall (232) to define a basket opening (250) configured to receive a filter; and
a plurality of perforated sidewall spacers (264), wherein each perforated sidewall spacer (264) comprises a face plate (266) with an array of perforation through openings (268) and a mounting tab (270) configured to mount within a corresponding mounting slot (260a, 260b) at the interior surface of the peripheral wall (230);
each perforated sidewall spacer (264) defining a liquid channel (274) between a back side of the face plate (266) and the interior surface of the peripheral wall (232).

11. The brew basket (208) of claim 10, wherein said mounting slot (260a, 260b) has an L-shaped cross-section and wherein said mounting tab (270) has an L-shaped cross-section configured to engage within the L-shaped cross-section of the mounting slot (260a, 260b).

12. An insert spacing ring (400) configured for insertion into a brew basket (108) of a brewing apparatus (100), wherein said brew basket (108) includes a bottom wall (132) including a dispensing opening (138) and a peripheral wall (130) extending from the bottom wall (132) to define a basket opening (150), said insert spacing ring (400) comprising:
a sidewall (402) with a shape conforming for insertion into the basket opening (150) and configured to receive a filter, the sidewall (402) including a plurality of perforated sidewall protrusions (406), each perforated sidewall protrusion (406) including an array of perforation through openings (408);
each perforated sidewall protrusion (406) defining a liquid channel (410) between a back side of the insert spacing ring (400) and the interior surface of the peripheral wall (130).

13. The insert spacing ring (400) of claim 12, wherein said sidewall (402) of the insert spacing ring (400) includes said perforated sidewall protrusions (406) interleaved with non-perforated regions (412) of the sidewall (402).

14. The insert spacing ring (400) of claim 13, wherein each perforated sidewall protrusion (406) has an inwardly spaced offset relative to adjacent non-perforated regions (412) of the sidewall.

15. The insert spacing ring (400) of claim 12, wherein the insert spacing ring (400) further includes a plurality of tabs (420) along a bottom edge of the sidewall (402), wherein each tab includes a slot (422) configured to engage with a corresponding rib (140) at the bottom wall of the brew basket.
